(19) Europäisches Patentamt
European Patent Office
Office européen des brevets

(11) EP 0 642 545 B1

(12) EUROPEAN PATENT SPECIFICATION

(45) Date of publication and mention of the grant of the patent: **22.09.1999 Bulletin 1999/38**

(21) Application number: **93912811.2**

(22) Date of filing: **26.05.1993**

(51) Int Cl.$^6$: **C08G 67/02**

(86) International application number: **PCT/EP93/01338**

(87) International publication number: **WO 93/24553 (09.12.1993 Gazette 1993/29)**

# (54) A PROCESS FOR THE PREPARATION OF CO-POLYMERS OF CARBON MONOXIDE AND ETHYLENICALLY UNSATURATED COMPOUNDS

VERFAHREN ZUR HERSTELLUNG VON KOHLENMONOXYDPOLYMEREN AUS KOHLENMONOXYD UND ETHYLENISCH UNGESAETTIGTEN VERBINDUNGEN

PROCEDE DE PREPARATION DE COPOLYMERES DE MONOXYDE DE CARBONE ET DE COMPOSES NON SATURES D'ETHYLENE

(84) Designated Contracting States:
**BE DE FR GB IT NL**

(30) Priority: **27.05.1992 EP 92201534**

(43) Date of publication of application:
**15.03.1995 Bulletin 1995/11**

(73) Proprietor: **SHELL INTERNATIONALE RESEARCH MAATSCHAPPIJ B.V.**
**2596 HR Den Haag (NL)**

(72) Inventors:
- **BRADFORD, Arleen, Marie**
  **NL-1031 CM Amsterdam (NL)**
- **VAN LEEUWEN, Petrus, Wilhelmus, Nicolaas, Maria**
  **NL-1031 CM Amsterdam (NL)**
- **WULLINK-SCHELVIS, Annetta, Maria**
  **NL-1031 CM Amsterdam (NL)**

(56) References cited:
**EP-A- 0 181 014**
**EP-A- 0 248 483**
**US-A- 4 835 250**

- **Organometallics, Vol. 9 No. 6 (1990), p.1735-1747**
- **Journal of Organometallic Chemistry, 424 (1992), C12-C16**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The invention relates to a process for the preparation of co-polymers of carbon monoxide with one or more compounds comprising an ethylenically unsaturated bond.

It is known that co-polymers of carbon monoxide and one or more ethylenically unsaturated compounds, in which co-polymers the units originating from carbon monoxide substantially alternate with the units originating from the ethylenically unsaturated compounds, may be prepared by reacting the monomers under polymerization conditions in the presence of a suitable catalyst.

According to EP-181014 the preparation of these co-polymers can be carried out in the liquid phase, i.e. such that the continuous phase is formed by a liquid diluent, usually a non-polymerizable liquid, such as methanol, in which the catalyst dissolves, but the formed co-polymers are substantially insoluble. The preparation of the co-polymers may also proceed in the gas phase, whereby the continuous phase is formed by gaseous carbon monoxide and possibly one or more of the other monomers, if they are present in the gas phase under the prevailing polymerization conditions. A process for the gas phase manufacture of linear alternating co-polymers is described in EP-248483.

It is considered that, in comparison with the liquid phase preparation of co-polymers of carbon monoxide and one or more ethylenically unsaturated compounds, there is merit in the preparation of such co-polymers in the gas phase, because the isolation and purification of the product which - in liquid phase operation of the process - normally requires a filtration or centrifugation step, is facilitated. Since these steps involve considerable costs when the process is carried out on a technical scale, it is regarded as a major advantage when such isolation and purification steps can be omitted.

In the known embodiments of the co-polymerization process i.e. both in embodiments carried out in the liquid phase and in those carried out in the gas phase, usually a catalyst system is applied which is based on a compound of a metal from Group VIII of the Periodic Table, an anion of an acid with a pKa of less than 2, with the exception of hydrohalogenic acids, and a bidentate ligand. It is believed that when using such a catalyst system in a liquid phase operation of the process, polymerization will only occur when an anion originating from the liquid diluent (usually a lower alcohol such as methanol) has been incorporated in the catalyst system. It is further believed that with these catalyst systems also in gas phase operation of the process, incorporation of a small amount of such anions in the catalyst system is required for obtaining good polymerization results.

It has accordingly been proposed to supply small amounts of a compound generating such anions during the gas phase process, in order to achieve a prolonged polymerization activity of the catalyst system. However, it will be clear that it would simplify the process if the use of such anion generating compounds can be omitted without impairing the polymerization results.

It has now been found that by selecting a particular catalyst system, the presence of the said anion generating compounds is no longer necessary. Moreover, it has been observed that the co-polymers thus prepared are characterized by a high crystallinity.

The invention can be defined as relating to a process for the preparation of co-polymers which comprises reacting a mixture consisting essentially of carbon monoxide and one or more ethylenically unsaturated compounds under polymerization conditions in the presence of an added catalyst system, optionally supported on a carrier, based on

(a) one metal selected from the Groups VI, VII or VIII of the Periodic Table; and

(b) an organic compound attached by a covalent bond via a carbon atom to the said metal, which compound contains at least one group comprising an oxygen atom which forms an additional, non-covalent, bond with the said metal and which compound does not contain any hydrogen atom in a beta position with respect to the metal (a) that is readily accessible to that metal; and

(c) one or more ligands complexing with a metal (a), and optionally in the presence of an aprotic diluent.

If desired, the process may be carried out in the presence of an aprotic diluent. As has been explained above, it is preferred to operate the polymerization process in the substantial absence of a non-polymerizable liquid diluent.

According to the invention, the catalyst is, inter alia, based on one metal selected from the Groups VI, VII or VIII of the Periodic Table.

These metals include chromium, molybdenum and tungsten (Group VI), manganese and rhenium (Group VII) and iron, cobalt, nickel, ruthenium, rhodium, palladium, osmium, iridium and platinum (Group VIII). They will further be indicated herein as metal(s) (a). Among these metals, those of Group VIII are preferred, in particular palladium, rhodium and nickel.

Catalysts based on palladium as metal (a) are most preferred. In the catalyst system the metal (a) may be present as a zero valent metal, or as a cation. Very suitable are catalyst systems comprising a metal (a), in particular palladium, as a monovalent cation, linked to one or more other components of the catalyst system.

According to the invention the catalyst system is further based on a stabilizing organic compound containing at least one group which forms a non-covalent bond with a metal (a). In the present description the stabilizing organic compound will be referred to as compound (b).

It is considered likely that the stabilizing effect of the compound (b) is related to the absence of any hydrogen atom which is in a beta position with respect to the metal (a) and readily accessible to that metal. Furthermore electronic factors and steric properties may be involved in the stabilizing function of the compounds (b).

Typically such a stabilizing organic compound is selected that upon formation of the additional, non-covalent bond a 5- or 6-membered ring is formed comprising the metal (a), the carbon atom of the stabilizing organic compound covalently bound to the metal (a) and the oxygen atom of the stabilizing organic compound, the other atoms of said 5- or 6-membered ring being atoms of the stabilizing organic compound, preferably carbon atoms. These other atoms may also be, for example, nitrogen, silicon or germanium.

Preferred compounds (b) may be found among the compounds comprising a cyclic moiety in their molecules and having up to 15 carbon atoms. Accordingly preference is given to compounds (b) containing a mono-, bi- or polycyclic moiety, in particular to compounds containing a mono-, or bicyclic structure. Suitable examples of such moieties are those derived from cyclopentadiene, bornene, norbornene, norbornadiene, camphene, naphthalene, styrene, indene and bicyclooctene. Also suitable are cyclic structures comprising one or more hetero atoms, such as structures derived from indole, benzopyran and pyrrole.

Examples of greatly preferred catalyst systems are systems wherein the metal (a) is linked to a norborn-2-yl or a norborn-5-en-2-yl group of the compound (b), or, alternatively, to an ethyl group of the compound (b).

Suitable groups present in the stabilizing organic compound (b) and capable of forming non-covalent bonds (NCB) with a metal (a) are groups comprising an oxygen atom with electron withdrawing properties.

The oxygen atom, for example, forms part of an acyl, acyloxy, alkoxy carbonyl or a sulphonyl group.

Preferred NCB forming groups include acyl and alkoxycarbonyl groups, typically having up to 10 carbon atoms, in particular acyl groups such as acetyl, propionyl or acyloxy groups such as acetoxy and propionyloxy groups. Acetyl groups are in particular preferred NCB forming groups.

Accordingly, as regards compound (b) preferred catalyst systems are based on 2-acetylnorbornene or 2-acetylnorbornadiene which are linked to a metal (a) via the carbon atom at position 1 and which form a non-covalent bond with that metal via the oxygen atom of the acetyl group.

In the process according to the invention a catalyst system is used which, in addition of metal (a) and compound (b), comprises one or more ligands capable of complexing with metal (a).

Suitable ligands include monodentate, bidentate and polydentate ligands, as well as ligands which, in addition to one or more complexing sites, comprise at least one site which can form a non-complexing bond with the metal (a).

Bidentate ligands are preferred, as it would appear that the presence of two complexing sites in one molecule significantly contributes to the formation of stable catalysts.

A preferred group of bidentate ligands can be indicated by the general formula

$$R^1R^2M^1\text{-}R\text{-}M^2R^3R^4 \qquad (I)$$

In this formula each of $M^1$ and $M^2$ independently represents a phosphorus, arsenic, antimony or nitrogen atom, each of $R^1$, $R^2$, $R^3$ and $R^4$ independently represents a substituted or non-substituted hydrocarbyl group and R represents a divalent organic bridging group containing at least one carbon atom in the bridge.

In the ligands of formula (I) $M^1$ and $M^2$ preferably represent phosphorus atoms. $R^1$, $R^2$, $R^3$ and $R^4$ may independently represent optionally substituted alkyl, aryl, alkaryl, aralkyl or cycloalkyl groups typically having up to 15 carbon atoms. Preferably at least one of $R^1$, $R^2$, $R^3$ and $R^4$ represents an aromatic group, in particular an aromatic group substituted by one or more polar groups.

Suitable polar groups include halogen atoms, such as fluorine and chlorine, alkoxy groups such as methoxy and ethoxy groups and alkylamino groups such as methylamino-, dimethylamino and diethylamino groups.

If one or more of $R^1$, $R^2$, $R^3$ and $R^4$ represents a substituted aryl group, preference is given to a phenyl group substituted at one or both ortho positions with respect to $M^1$ or $M^2$, with an alkoxy group, preferably a methoxy group.

In the ligands of formula (I), R preferably represents a divalent organic bridging group containing from 2 to 4 bridging atoms, at least two of which are carbon atoms.

Examples of suitable groups R are: $-CH_2-CH_2-$; $-CH_2-CH_2-CH_2-$; $-CH_2Si(CH_3)_2-CH_2-$; $-CH_2-C(CH_3)_2-CH_2$ and $-CH_2-CH_2-CH_2-CH_2-$.

Particularly suitable bidentate ligands are 1,3-bis[bis(2-methoxyphenyl)phosphino]propane and 1,3-bis(diphenylphosphino)propane.

Another preferred group of bidentate ligands can be indicated by the general formula

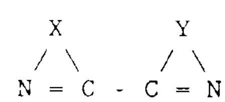

wherein X and Y independently represent organic bridging groups. each containing 3 or 4 atoms in the bridge

at least 2 of which are carbon atoms. The bridging groups X and Y are preferably identical. Particularly suitable bidentate ligands are 2,2'-bipyridine and 1,10-phenanthroline.

Other suitable bidentate ligands are for example bis thiocompounds such as 1,2-bis(ethylthio)ethane and 1,2-bis(propylthio) ethane and mixed ligands such as l-diphenylphosphino-3-ethylthiopropane.

Preferred monodentate ligands may be indicated by the general formula

$$R^5R^6R^7M^3 \qquad (II),$$

wherein $M^3$ represents a phosphorus, arsenic or antimony atom and each of $R^5$, $R^6$ and $R^7$ independently represents a substituted or unsubstituted hydrocarbyl group, typically having up to 15 carbon atoms.

Preferably $M^3$ represents a phosphorus atom. $R^5$, $R^6$ and $R^7$ are preferably phenyl groups.

Other preferred monodentate ligands may be indicated by the general formula $R^8R^9P\text{-}R^{10}\text{-}SO_3^-$ wherein $R^8$ and $R^9$ independently represent substituted or non-substituted hydrocarbyl groups, typically having up to 15 carbon atoms, and $R^{10}$ represents an organic bridging group having 1 - 4 carbon atoms in the bridge. These monodentate ligands carry a negative charge which may compensate a positive charge of a metal (a), if there is any. It is preferred to use an aromatic sulphonate of which the groups $R^8$ and $R^9$ are identical. If the groups $R^8$ and $R^9$ are substituted aryl groups they are preferably alkoxy substituted, the substitution typically being ortho with respect to the phosphorus atom. Very suitable ligands of this kind are 2-(dicyclohexylphosphino)benzenesulphonate or 2-(diphenylphosphino)benzenesulphonate.

The catalyst system according to the invention may contain one or more weakly or non-coordinating anions in order to compensate for any positive charge which the total of the metal(s) (a), compound (b) and the ligand(s) may have. The weakly or non-coordinating anions are selected from the anions of acids with a pKa of less than 6, more in particular less than 2. Examples of such anions are the anions of trifluoroacetic acid, p-toluenesulphonic acid and $HBF_4$. Anions of $HBF_4$ are particularly preferred.

For the preparation of the catalyst systems according to the invention use may be made of a method known per se. Reference is made in particular to the preparation methods described in Organometallics, Vol 9, No. (1990) pages 1736-1739 and in Journal of Organometallic Chemistry, 424 (1992) C12-C16. Details of specific catalyst systems are furthermore mentioned in the examples described hereinafter.

The catalyst systems of the invention include compositions which are novel.

The invention therefore also relates to a catalyst system based on

(a) one metal selected from the Groups VI, VII or VIII of the Periodic Table; and

(b) an organic compound attached by a covalent bond via a carbon atom to the said metal, which compound contains at least one group comprising an oxygen atom which forms an additional, non-covalent bond with the said metal and which compound does not contain any hydrogen atom in a beta position with respect to the metal (a) that is readily accessible to that metal; and

(c) one or more ligands complexing with metal (a), which ligands are selected from bidentate ligands, polydentate ligands and ligands which, in addition to one or more complexing sites, comprise at least one site which can form a non-complexing bond with the metal (a), provided that when the ligand is a nitrogen bidentate ($L^1$) which is N,N,N',N'-tetramethylethylenediamine or 2,2'-bipyridine the catalyst system is based on other than the olefin insertion product of $[L^1Pd\text{-}CO\text{-}CH_3]$ $(CF_3SO_3)$ and norbornene and when the ligand is a nitrogen bidentate ($L^2$) which is 2,2'-bipyridine the catalyst system is based on other than the olefin insertion product of $[L^2Pd\text{-}CO\text{-}CH_3](CF_3SO_3)$ and dicyclopentadiene.

The said olefin insertion products are known from Journal of Organometallic Chemistry, 424 (1992) C12-C16.

The amount of catalyst added in the copolymerization process of the invention may vary between wide limits. Generally the amount of catalyst is such that $10^{-8}$ to $10^{-2}$ gram atom of metal (a) per mole of ethylenically unsaturated compound to be copolymerized is present. Preferably, the catalyst is used in an amount of $10^{-7}$ to $10^{-3}$ gram atom of metal (a) per mole of ethylenically unsaturated compound.

If desired a catalyst system may be used which is supported on a carrier, usually in order to facilitate the introduction of the catalyst system in the reactor. Suitable carrier materials may be inorganic, such as silica, alumina or charcoal, or organic, such as cellulose or dextrose. Furthermore as carrier material a polymer may be used, for example polyethylene, polypropylene, polystyrene or a copolymer of carbon monoxide with an ethylenically unsaturated compound such as the co-polymers of the process of the invention.

Ethylenically unsaturated compounds suitable to be used as starting material in the co-polymerization process of the invention include compounds consisting exclusively of carbon and hydrogen and compounds which in addition comprise one or more hetero-atoms, such as unsaturated esters. Unsaturated hydrocarbons are preferred, in particular those having 2-10 carbon atoms. Suitable examples are lower olefins such as ethene, propene and 1-butene, cyclic compounds such as cyclopentene and aromatic compounds such as styrene and alpha-methyl styrene. Preference is given to the use of ethene, propene or a mixture of ethene and propene.

The molar ratio between the monomers, viz. carbon monoxide and the ethylenically unsaturated compound(s), is generally selected in the range of 5:1 to 1:5. Preferably the said molar ratio is selected in the range of 1.5:1 to 1:1.5 and most preferably the monomers are used in substantially equimolar amounts.

The preparation of the co-polymers is preferably carried out at a temperature in the range of 20-200 °C, although the use of a reaction temperature outside that range is not precluded. Preferably the reaction temperature is selected in the range of 25-120 °C.

Suitable pressures generally are within the range of 1-200 bar, but preferably the pressure is in the range of 10-100 bar.

The higher the molecular weight of the co-polymers according to the invention, the higher will be in general the intrinsic viscosity they exhibit. For the determination of the intrinsic viscosity of a co-polymer according to the invention, four solutions are prepared by dissolving the co-polymer in four different concentrations at 100 °C in m-cresol. For each of these solutions, the viscosity is measured in a viscometer at 100 °C relative to m-cresol at 100 °C.

If $T_o$ represents the outflow time of m-cresol and $T_p$ the outflow time of the polymer solution, the relative viscosity ($\eta_{rel}$) is obtained from $\eta_{rel}=T_p/T_o$. From $\eta_{rel}$ the inherent viscosity ($\eta_{inh}$) can be calculated according to the formula:

$$\eta_{inh} = \frac{\ln \eta_{rel}}{c}$$

where c represents the concentration of the co-polymer in grams per 100 ml solution. By plotting graphically the $\eta_{inh}$ found for each of the four solutions against the corresponding concentration c and then by extrapolating to c=0, the intrinsic viscosity [η] in dl/g is found. Instead of "instrinsic viscosity", this patent application will henceforth use the term recommended by the International Union of Pure and Applied Chemistry, viz. "Limiting Viscosity Number" (LVN). The co-polymers according to the invention generally have an LVN of between 0.2 and 4.0 dl/g. Preferred co-polymers have an LVN of between 0.3 and 3 dl/g.

The co-polymers obtained according to the invention have a high crystallinity and exhibit good mechanical properties. They may be processed by means of the usual techniques into films, sheets, plates, fibres, shaped articles and the like. The copolymers with a relatively low molecular weight are suitable for use as intermediates for the production of plastics, as blending components and as plasticizers for other polymers.

The co-polymers with high molecular weight are suitable as premium thermoplastics for fibers or films, or for injection moulding, compression moulding or blowing applications. These high molecular weight co-polymers may be used for many applications, such as in the car industry, for the manufacturing of packaging materials for foods and drinks, as constructional and building material, as insulating material in the production of cables and for various applications in the domestic sphere.

The invention will further be illustrated by the following examples.

Example 1

A carbon monoxide/ethene copolymer was prepared as follows.

A complex of the formula $[Pd(C_7H_{10}COMe)(PPh_3)_2](BF_4)$ wherein $C_7H_{10}COMe$ stands for 2-acetylnorborn-1-yl and $PPh_3$ for triphenylphosphine, was placed in an autoclave as a dry solid (2.8 mg Pd).

The autoclave had been previously heated to 110 °C for 2 hours and then cooled under a stream of nitrogen to ensure minimal residual water.

The autoclave was then flushed three times with CO before being pressurized to 20 bar with CO and an additional 20 bar with ethene (total pressure 40 bar).

Subsequently the autoclave was heated such that the internal temperature was 43 °C.

After 18 hours the autoclave was cooled to room temperature and depressurized. It contained 135 mg of polymer powder.

Example 2

A carbon monoxide/ethylene copolymer was prepared substantially following the procedures of Example 1, except for the following differences:

a. 13.8 mg was used of a complex of the formula $[LPd(C_7H_{10}COCH_3)](BF_4)$ (containing 1.7 mg palladium), wherein L stands for 1,3-bis[bis(2-methoxyphenyl)phosphino]propane and $C_7H_{10}COCH_3$ for 2-acetylnorborn-1-yl, instead of the complex of the formula $[Pd(C_7H_{10}COCH_3)(PPh_3)_2](BF_4)$,
b. the polymerisation temperature was 100 °C instead of 43 °C, and
c. the reaction time was 1 hour instead of 18 hours.

The yield of polymer was 0.34 g.

Example 3

A carbon monoxide/ethylene copolymer was prepared substantially following the procedures of Example 1, except for the following differences:

a. 8.2 mg was used of a complex of the formula $[LPd(C_7H_{10}COCH_3)](BF_4)$ (containing 1.7 mg palladium), wherein L stands for 1,10-phenanthroline and

$C_7H_{10}COCH_3$ for 2-acetylnorborn-1-yl, instead of the complex of the formula $[Pd(C_7H_{10}COCH_3)(PPh_3)_2](BF_4)$, and
b. the polymerisation temperature was 100 °C instead of 43 °C.

The yield of polymer was 0.9 g.

Example 4 (comparative)

The procedures of Example 1 were substantially repeated, except for the following differences:

a. 35.7 mg was used of a complex of the formula $(LPd)(CH_3COO)_2$ (containing 5 mg palladium), wherein L stands for 1,3-bis[bis-(2-methoxyphenyl) phosphino]propane, instead of the complex of the formula $[Pd(C_7H_{10}COCH_3)(PPh_3)_2](BF_4)$,
b. the polymerisation temperature was 100 °C instead of 43 °C, and
c. the reaction time was 3 hour instead of 18 hours.

The polymer yield was negligible.

Examples 5 - 9

In Examples 5 - 9 a complex was used which was impregnated onto 5.0 g of a carrier prior to the introduction into the autoclave. The carrier was a carbon monoxide/ethene/propene terpolymer obtained by polymerisation of carbon monoxide with ethene and propene in methanol in the presence of a catalyst obtained by combining palladium acetate, 1,3-bis[bis-(2-methoxyphenyl)phosphino]propane and trifluoroacetic acid. The impregnation was effected by evenly distributing a solution of the complex to be used in 3 ml dichloromethane over 5 g of the carrier and drying the mixture obtained in nitrogen at 50 °C over 30 minutes.

Example 5

A carbon monoxide/ethylene copolymer was prepared substantially following the procedures of Example 1, except for the following differences:

a. 15.0 mg was used of a complex of the formula $[LPd(C_7H_{10}COCH_3)](BF_4)$ (containing 5.0 mg palladium), wherein L stands for 1,3-bis(diphenylphosphino)propane and $C_7H_{10}COCH_3$ for 2-acetylnorborn-1-yl, instead of the complex of the formula $[Pd(C_7H_{10}COCH_3)(PPh_3)_2](BF_4)$,
b. prior to introduction into the autoclave the complex was impregnated onto a carrier,
c. the polymerisation temperature was 100 °C instead of 43 °C, and
d. the reaction time was 1 hour instead of 18 hours.

The quantity of polymer prepared was 2.5 g.

Example 6

A carbon monoxide/ethylene copolymer was prepared substantially following the procedures of Example 1, except for the following differences:

a. 17.2 mg was used of a complex of the formula $LPd(C_7H_{10}COCH_3)$ (containing 3.0 mg palladium), wherein L stands for 2-(diphenylphosphino)benzenesulphonate and $C_7H_{10}COCH_3$ for 2-acetylnorborn-1-yl, instead of the complex of the formula $[Pd(C_7H_{10}COCH_3)(PPh_3)_2](BF_4)$,
b. prior to introduction into the autoclave the complex was impregnated onto a carrier,
c. the polymerisation temperature was 100 °C instead of 43 °C, and
d. the reaction time was 1 hour instead of 18 hours.

The quantity of polymer prepared was 1.0 g.

Example 7

A carbon monoxide/ethylene copolymer was prepared substantially following the procedures of Example 1, except for the following differences:

a. 19.0 mg was used of a complex of the formula $LPd(CH_2CH_2COCH_3)$ (containing 4.0 mg palladium), wherein L stands for 2-(diphenylphosphino) benzenesulphonate, instead of the complex of the formula $[Pd(C_7H_{10}COCH_3)(PPh_3)_2](BF_4)$,
b. prior to introduction into the autoclave the complex was impregnated onto a carrier,
c. the polymerisation temperature was 100 °C instead of 43 °C, and
d. the reaction time was 1 hour instead of 18 hours.

The quantity of polymer prepared was 0.53 g.

Example 8

A carbon monoxide/ethylene copolymer was prepared substantially following the procedures of Example 1, except for the following differences:

a. 20.65 mg was used of a complex of the formula $LPd(C_7H_{10}COCH_3)$ (containing 4.0 mg palladium), wherein L stands for 2-(dicyclohexylphosphino) benzenesulphonate and $C_7H_{10}COCH_3$ for 2-acetylnorborn-1-yl, instead of the complex of the formula $[Pd(C_7H_{10}COCH_3)(PPh_3)_2](BF_4)$,
b. prior to introduction into the autoclave the complex was impregnated onto a carrier,
c. the polymerisation temperature was 100 °C instead of 43 °C, and
d. the reaction time was 1 hour instead of 18 hours.

The quantity of polymer prepared was 0.11 g.

Example 9

A carbon monoxide/ethylene copolymer was prepared substantially following the procedures of Example 1, except for the following differences:

a. 27.0 mg was used of a complex of the formula $[LPd(C_7H_{10}COCH_3)](BF_4)$ (containing 4.0 mg palladium), wherein L stands for 1,3-bis(diphenylphosphino)propane and $C_7H_{10}COCH_3$ for 2-acetylnorborn-1-yl, instead of the complex of the formula $[Pd(C_7H_{10}COCH_3)(PPh_3)_2](BF_4)$,
b. prior to introduction into the autoclave the complex was impregnated onto a carrier,
c. 5 bar hydrogen was present in addition to carbon monoxide and ethene,
d. the polymerisation temperature was 80 °C instead of 43 °C, and
e. the reaction time was 1 hour instead of 18 hours.

The quantity of polymer prepared was 1.2 g.

Example 10 (comparative)

The procedures of Example 1 were substantially repeated, except for the following differences:

a. 5.0 g of the carrier as used in Examples 5 - 9, but without being impregnated, was introduced into the autoclave, instead of the complex of the formula $[Pd(C_7H_{10}COCH_3)(PPh_3)_2](BF_4)$,
b. the polymerisation temperature was 80 °C instead of 43 °C, and
c. the reaction time was 1 hour instead of 18 hours.

No measurable quantity of polymer was formed.

With the aid of $^{13}C$ NMR analysis it was established that the products obtained in Examples 1-3 are polymers substantially consisting of linear chains in which units derived from carbon monoxide are alternating with units derived from ethene. It was further established that the products obtained in Examples 5-9 contained the same polymers in addition to the terpolymer which was used as the carrier.

**Claims**

1. A process for the preparation of co-polymers which comprises reacting a mixture consisting essentially of carbon monoxide and one or more ethylenically unsaturated compounds under polymerization conditions in the presence of an added catalyst system, optionally supported on a carrier, based on

(a) one metal selected from the groups VI, VII or VIII of the Periodic Table; and
(b) an organic compound attached by a covalent bond via a carbon atom to the said metal, which compound contains at least one group comprising an oxygen atom which forms an additional, non-covalent, bond with the said metal and which compound does not contain any hydrogen atom in a beta position with respect to the metal (a) that is readily accessible to that metal; and
(c) one or more ligands complexing with metal (a), and optionally in the presence of an aprotic diluent.

2. A process as claimed in claim 1, characterized in that the reaction is carried out as a gas phase process.

3. A process as claimed in claim 1 or 2, characterized in that a catalyst system is used which, as regards (a), is based on palladium.

4. A process as claimed in any of claims 1-3, characterized in that upon formation of the additional, non-covalent bond a 5- or 6-membered ring is formed comprising the said metal, the said carbon atom and the said oxygen atom, the other atoms of the 5- or 6-membered ring being atoms of the said organic compound.

5. A process as claimed in any of claims 1-4, characterized in that the said organic compound comprises an ethyl, a norborn-2-yl or a norborn-5-en-2-yl group.

6. A process as claimed in any of claims 1-5, characterized in that the oxygen atom present in the organic compound forms part of an acyl group.

7. A process as claimed in any of claims 1-6, characterized in that the organic compound is butenone, 3-acetyl norbornene or 3-acetyl norbornadiene.

8. A process as claimed in any of claims 1-7, characterized in that the catalyst system comprises a bidentate ligand of the general formula $R^1R^2M^1$-R-$M^2R^3R^4$ (formula (I)), wherein each of $M^1$ and $M^2$ independently represents a phosphorus, arsenic, antimony or nitrogen atom, each of $R^1$, $R^2$, $R^3$ and $R^4$ independently represents a substituted or non-substituted hydrocarbyl group and R represents a divalent organic bridging group containing at least one carbon atom in the bridge, or a bidentate ligand of the general formula

```
   X        Y
  / \      / \
 N = C  -  C = N
```

wherein X and Y independently represent organic bridging groups, each containing 3 or 4 atoms in the bridge at least 2 of which are carbon atoms, or a ligand which is a sulphonate anion of the general formula $R^BR^9P\text{-}R^{10}\text{-}SO_3^-$ wherein $R^8$ and $R^9$ independently represent substituted or non-substituted hydrocarbyl groups and $R^{10}$ represents an organic bridging group having 1 - 4 carbon atoms in the bridge.

**9.** A process as claimed in claim 8, characterized in that in the ligand of formula (I) both $M^1$ and $M^2$ represent phosphorus atoms, at least one of $R^1$, $R^2$, $R^3$ and $R^4$ represents an aromatic group substituted by a polar group at one or both ortho positions with respect to $M^1$ or $M^2$, and R represents a divalent organic bridging group containing from 2 to 4 bridging atoms, at least 2 of which are carbon atoms.

**10.** A process as claimed in any of claims 1-7, characterized in that a catalyst system is used which comprises at least one monodentate ligand of the general formula $R^5R^6R^7M^3$ (formula (II)), wherein $M^3$ represents a phosphorus, arsenic or antimony atom, and each of $R^5$, $R^6$ and $R^7$ independently represents a substituted or non-substituted hydrocarbyl group.

**11.** A process as claimed in any of claims 1-7, characterized in that the one or more ligands are selected from 1,3-bis[bis(2-methoxyphenyl)phosphino]-propane, 1,3-bis(diphenylphosphino)propane, 1,10-phenanthroline, 2,2'-bipyridine, triphenylphosphine, 2-(diphenylphosphino)benzene sulphonate and 2-(dicyclohexylphosphino)benzene sulphonate.

**12.** A process as claimed in any of claims 1-11, characterized in that the catalyst system comprises an anion of an acid with a pKa of less than 6.

**13.** A process as claimed in any of claims 1-12, characterized in that the catalyst system is used in an amount of $10^{-7}$ to $10^{-3}$ gram atom of metal (a) per mole of ethylenically unsaturated compound to be copolymerized, as ethylenically unsaturated compound ethene, propene, or a mixture of ethene and propene is used, the molar ratio between carbon monoxide on the one hand and the ethylenically unsaturated compound(s) on the other, is in the range from 1.5:1 to 1:1.5, and in that the reaction is carried out at a temperature in the range of 25-120 °C and at a pressure in the range of 10-100 bar.

**14.** A catalyst system based on

(a) one metal selected from the groups VI, VII or VIII of the Periodic Table; and
(b) an organic compound attached by a covalent bond via a carbon atom to the said metal, which compound contains at least one group comprising an oxygen atom which forms an additional, non-covalent, bond with the said metal and which compound does not contain any hydrogen atom in a beta position with respect to the metal (a) that is readily accessible to that metal; and
(c) one or more ligands complexing with metal (a), which ligands are selected from bidentate ligands, polydentate ligands and ligands which, in addition to one or more complexing sites, comprise at least one site which can form a non-complexing bond with the metal (a), provided that when the ligand is a nitrogen bidentate ($L^1$) which is N,N,N',N'-tetramethylethylenediamine or 2,2'-bipyridine the catalyst system is based on other than the olefin insertion product of $[L^1Pd\text{-}CO\text{-}CH_3](CF_3SO_3)$ and norbornene and when the ligand is a nitrogen bidentate ($L^2$) which is 2,2'-bipyridine the catalyst system is based on other than the olefin insertion product of $[L^2Pd\text{-}CO\text{-}CH_3](CF_3SO_3)$ and dicyclopentadiene.

**15.** A catalyst system as claimed in claim 14, characterized in that the catalyst system is based on palladium as regards (a).

**Patentansprüche**

**1.** Verfahren zur Herstellung von Copolymeren, welches die Umsetzung eines im wesentlichen aus Kohlenmonoxid und einer oder mehreren ethylenisch ungesättigten Verbindungen bestehenden Gemisches unter Polymerisationsbedingungen in Gegenwart eines zugesetzten Katalysatorsystems, gegebenenfalls aufgebracht auf einen Träger, umfaßt, das auf

(a) einem aus den Gruppen VI, VII oder VIII des Periodensystems ausgewählten Metall; und

(b) einer organischen Verbindung, die durch eine kovalente Bindung über ein Kohlenstoffatom an dieses Metall gebunden ist, welche Verbindung wenigstens eine Gruppe enthält, die ein Sauerstoffatom umfaßt, welches eine zusätzliche, nicht-kovalente Bindung an dieses Metall ausbildet und welche Verbindung kein

Wasserstoffatom in einer beta-Stellung zum Metall (a) enthält, welches Wasserstoffatom für dieses Metall leicht zugänglich ist; und

(c) einem oder mehreren Liganden aufgebaut ist, die mit einem Metall (a) einen Komplex bilden,

gegebenenfalls in Gegenwart eines aprotischen Verdünnungsmittels.

2. Verfahren nach Anspruch 1, dadurch gekennzeichnet, daß die Umsetzung als ein Gasphasenverfahren durchgeführt wird.

3. Verfahren nach Anspruch 1 oder 2, dadurch gekennzeichnet, daß ein Katalysatorsystem verwendet wird, welches hinsichtlich (a) auf Palladium basiert.

4. Verfahren nach einem der Ansprüche 1 bis 3, dadurch gekennzeichnet, daß bei Ausbildung der zusätzlichen, nichtkovalenten Bindung ein 5- oder 6-gliedriger Ring ausgebildet wird, der dieses Metall, dieses Kohlenstoffatom und dieses Sauerstoffatom umfaßt, wobei die anderen Atome des 5- oder 6-gliedrigen Ringes Atome dieser organischen Verbindung sind.

5. Verfahren nach einem der Ansprüche 1 bis 4, dadurch gekennzeichnet, daß diese organische Verbindung eine Ethyl-, eine Norborn-2-yl- oder eine Norborn-5-en-2-yl-Gruppe umfaßt.

6. Verfahren nach einem der Ansprüche 1 bis 5, dadurch gekennzeichnet, daß das Sauerstoffatom, das in der organischen Verbindung vorhanden ist, Teil einer Acylgruppe ausbildet.

7. Verfahren nach einem der Ansprüche 1 bis 6, dadurch gekennzeichnet, daß die organische Verbindung Butenon, 3-Acetylnorbornen oder 3-Acetylnorbornadien ist.

8. Verfahren nach einem der Ansprüche 1 bis 7, dadurch gekennzeichnet, daß das Katalysatorsystem einen Bidentatliganden der allgemeinen Formel $R^1R^2M^1$-R-$M^2R^3R^4$ (Formel (I)) umfaßt, worin jedes $M^1$ und $M^2$ unabhängig voneinander für ein Phosphor-, Arsen-, Antimon- oder Stickstoffatom steht, jeder Rest $R^1$, $R^2$, $R^3$ und $R^4$ unabhängig voneinander eine substituierte oder unsubstituierte Kohlenwasserstoffgruppe darstellt und R für eine zweiwertige organische Brückengruppe mit wenigstens einem Kohlenstoffatom in der Brücke steht, oder einen Bidentatliganden der allgemeinen Formel

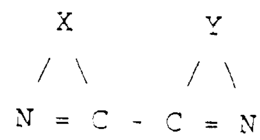

umfaßt, worin X und Y unabhängig voneinader organische Brückengruppen darstellen, wovon jede 3 oder 4 Atome in der Brücke enthält, von denen mindestens 2 Kohlenstoffatome sind, oder einen Liganden umfaßt, der ein Sulfonatanion der allgemeinen Formel $R^8R^9P$-$R^{10}$-$SO_3^-$ ist, worin $R^8$ und $R^9$ unabhängig voneinander substituierte oder unsubstituierte Kohlenwasserstoffgruppen darstellen und $R^{10}$ eine organische Brückengruppe mit 1-4 Kohlenstoffatomen in der Brücke bedeutet.

9. Verfahren nach Anspruch 8, dadurch gekennzeichnet, daß im Liganden der Formel (I) sowohl $M^1$ als auch $M^2$ Phosphoratome bedeuten wenigstens einer der Reste $R^1$, $R^2$, $R^3$ und $R^4$ eine aromatische Gruppe bedeutet, die durch eine polare Gruppe an einer oder an beiden ortho-Stellungen hinsichtlich $M^1$ oder $M^2$ substituiert ist, und R für eine zweiwertige organische Brückengruppe mit 2 bis 4 Brückenatomen, von denen wenigstens 2 Kohlenstoffatome sind, steht.

10. Verfahren nach einem der Ansprüche 1 bis 7, dadurch gekennzeichnet, daß ein Katalysatorsystem verwendet wird, welches wenigstens einen Monodentatliganden der allgemeinen Formel $R^5R^6R^7M^3$ (Formel II)) umfaßt, worin $M^3$ für ein Phosphor-, Arsen- oder Atimonatom steht und jeder Rest $R^5$,$R^6$ und $R^7$ unabhängig voneinander für eine substituierte oder unsubstituierte Kohlenwasserstoffgruppe steht.

11. Verfahren nach einem der Ansprüche 1 bis 7, dadurch gekennzeichnet, daß ein oder mehrere Liganden unter 1,3-Bis([bis(2-methoxyphenyl)phosphino]-propan, 1,3-Bis(diphenylphosphino)propan, 1,10-Phenanthrolin, 2,2-Bipyridin, Triphenylphosphin, 2-(Diphenylphosphino)benzolsulfonat und 2-(Dicyclohexylphosphino)benzolsulfonat ausgewählt sind.

12. Verfahren nach einem der Ansprüche 1 bis 11, dadurch gekennzeichnet, daß das Katalysatorsystem ein Anion einer Säure mit einem pKa-Wert von weniger als 6 umfaßt.

13. Verfahren nach einem der Ansprüche 1 bis 12, dadurch gekennzeichnet, daß das Katalysatorsystem in einer Menge von $10^{-7}$ bis $10^{-3}$ Grammatom Metall (a) pro Mol ethylenisch ungesättigter Verbindung, die copolymerisiert werden soll, eingesetzt wird,

daß als ethylenisch ungesättigte Verbindung Ethen, Propen oder ein Gemisch aus Ethen und Propen verwendet wird, wobei das Molverhältnis von Kohlenmonoxid einerseits und der (den) ethylenisch ungesättigten Verbindung(en) anderseits im Bereich von 1,5:1 bis 1:1,5 liegt und daß die Umsetzung bei einer Temperatur im Bereich von 25-120°C und bei einem Druck im Bereich von 10-100 bar durchgeführt wird.

**14.** Katalysatorsystem auf der Basis

(a) eines Metalls, das aus den Gruppen VI, VII oder VIII des Periodensystems ausgewählt ist;

(b) einer organischen Verbindung, die durch eine kovalente Bindung über ein Kohlenstoffatom an dieses Metall gebunden ist, welche Verbindung wenigstens eine Gruppe enthält, die ein Sauerstoffatom umfaßt, welches eine zusätzliche, nicht-kovalente Bindung an dieses Metall ausbildet und welche Verbindung kein Wasserstoffatom in einer beta-Stellung zum Metall (a) enthält, welches Wasserstoffatom für dieses Metall leicht zugänglich ist; und

(c) eines oder mehrerer Liganden, der (die) mit dem Metall (a) einen Komplex bildet (bilden), welche Liganden aus Bidentatliganden, Polydentatliganden und Liganden ausgewählt sind, die zusätzlich zu einer oder mehreren komplexierenden Stellen wenigstens eine Stelle umfassen, die eine nicht-komplexierende Bindung mit dem Metall (a) ausbilden kann, mit der Maßgabe, daß das Katalysatorsystem - wenn der Ligand ein Stickstoffbidentat ($L^1$) ist, welches N,N,N',N'-Tetramethylethylendiamin oder 2,2'-Bipyridin ist - auf einem anderen als dem Olefininsertionsprodukt [$L^1$Pd-CO-$CH_3$]($CF_3SO_3$) und Norbornen aufgebaut ist und dann, wenn der Ligand ein Stickstoffbidentat ($L^2$) ist, welches 2,2'-Bipyridin ist, das Katalysatorsystem auf einem anderen als dem Olefininsertionsprodukt [$L^2$Pd-CO-$CH_3$]($CF_3SO_3$) und Dicyclopentadien aufgebaut ist.

**15.** Katalysatorsystem nach Anspruch 14, dadurch gekennzeichnet, daß das Katalysatorsystem hinsichtlich (a) auf Palladium beruht.

**Revendications**

**1.** Procédé de préparation de copolymères qui comprend la réaction d'un mélange formé essentiellement de monoxyde de carbone et d'un ou plusieurs composés éthyléniquement insaturés sous des conditions de polymérisation en présence d'un système de catalyseur ajouté, éventuellement fixé sur un support, à base

(a) d'un métal choisi parmi les Groupes VI, VII ou VIII du Tableau Périodique; et
(b) d'un composé organique attaché par une liaison covalente via un atome de carbone audit métal, lequel composé contient au moins un groupe comprenant un atome d'oxygène qui forme une liaison non covalente, additionnelle avec le métal susdit et lequel composé ne contient pas d'atome d'hydrogène en position bêta par rapport au métal (a) qui soit aisément accessible à ce métal; et
(c) d'un ou plusieurs ligands se complexant avec le métal (a), et éventuellement en présence d'un diluant neutre.

**2.** Procédé suivant la revendication 1, caractérisé en ce que la réaction est réalisée sous la forme d'un procédé en phase gazeuse.

**3.** Procédé suivant l'une ou l'autre des revendications 1 et 2, caractérisé en ce qu'on utilise un système de catalyseur qui, pour ce qui est de (a), est à base de palladium.

**4.** Procédé suivant l'une quelconque des revendications 1 à 3, caractérisé en ce que lors de la formation de la liaison non covalente, additionnelle est formé un cycle pentagonal ou hexagonal comprenant le métal, l'atome de carbone et l'atome d'oxygène précités, les autres atomes du cycle pentagonal ou hexagonal étant des atomes du composé organique précité.

**5.** Procédé suivant l'une quelconque des revendications 1 à 4, caractérisé en ce que ledit composé organique comprend un groupe éthyle, norborn-2-yle ou norborn-5-én-2-yle.

**6.** Procédé suivant l'une quelconque des revendications 1 à 5, caractérisé en ce que l'atome d'oxygène présent dans le composé organique fait partie d'un groupe acyle.

**7.** Procédé suivant l'une quelconque des revendications 1 à 6, caractérisé en ce que le composé organique est la buténone, le 3-acétyl norbornène ou le 3-acétyl norbornadiène.

**8.** Procédé suivant l'une quelconque des revendications 1 à 7, caractérisé en ce que le système de catalyseur comprend un ligand bidenté de la formule générale $R^1R^2M^1$-R-$M^2R^3R^4$ [formule (I)], dans laquelle chacun des $M^1$ et $M^2$ représente indépendamment un atome de phosphore, d'arsenic, d'antimoine ou d'azote, chacun des $R^1$, $R^2$, $R^3$ et $R^4$ re-

présente indépendamment un groupe hydrocarbyle substitué ou non substitué et R représente un groupe de pontage organique divalent contenant au moins un atome de carbone dans le pont, ou un ligand bidenté de la formule générale :

```
    X         Y
   / \       / \
  N = C  -  C = N
```

dans laquelle X et Y représentent indépendamment des groupes de pontage organiques, chacun contenant 3 ou 4 atomes dans le pont dont au moins deux sont des atomes de carbone, ou un ligand qui est un anion sulfonate de la formule générale $R^BR^9P-R^{10}-SO_3^-$, dans laquelle $R^8$ et $R^9$ représentent indépendamment des groupes hydrocarbyle substitués ou non substitués et $R^{10}$ représente un groupe de pontage organique comportant 1-4 atomes de carbone dans le pont.

**9.** Procédé suivant la revendication 8, caractérisé en ce que dans le ligand de formule (I) $M^1$ et $M^2$ représentent tous deux des atomes de phosphore, au moins un des $R^1$, $R^2$, $R^3$ et $R^4$ représente un groupe aromatique substitué par un groupe polaire à une ou aux deux positions ortho par rapport à $M^1$ ou $M^2$, et R représente un groupe de pontage organique divalent contenant de 2 à 4 atomes de pontage, dont au moins deux sont des atomes de carbone.

**10.** Procédé suivant l'une quelconque des revendications 1 à 7, caractérisé en ce qu'on utilise un système de catalyseur qui comprend au moins un ligand monodenté de la formule générale $R^5R^6R^7M^3$ [formule (II)], dans laquelle $M^3$ représente un atome de phosphore, d'arsenic ou d'antimoine et chacun des $R^5$, $R^6$ et $R^7$ représente indépendamment un groupe hydrocarbyle substitué ou non substitué.

**11.** Procédé suivant l'une quelconque des revendications 1 à 7, caractérisé en ce que le ou les différents ligands sont choisis parmi le 1,3-bis[bis(2-méthoxyphényl)phosphino]propane, le 1,3-bis(diphénylphosphino)propane, la 1,10-phénanthroline, la 2,2'-bipyridine, la triphénylphosphine, le 2-(diphénylphosphino)benzène sulfonate et le 2-(dicyclohexylphosphino)benzène sulfonate.

**12.** Procédé suivant l'une quelconque des revendications 1 à 11, caractérisé en ce que le système de catalyseur comprend un anion d'un acide avec un pKa inférieur à 6.

**13.** Procédé suivant l'une quelconque des revendications 1 à 12, caractérisé en ce qu'on utilise le système de catalyseur en une quantité de $10^{-7}$ à $10^{-3}$ atome-gramme de métal (a) par mole de composé éthyléniquement insaturé à copolymériser, comme composé éthyléniquement insaturé on utilise l'éthène, le propène ou un mélange d'éthène et de propène, le rapport molaire entre le monoxyde de carbone d'une part et le(s) composé(s) éthyléniquement insaturé(s) d'autre part, se situe dans la gamme 1,5/1 à 1/1,5, et en ce que la réaction est réalisée à une température dans l'intervalle de 25-120°C et à une pression dans la gamme de 10-100 bars.

**14.** Système de catalyseur à base

(a) d'un métal choisi parmi les Groupes VI, VII ou VIII du Tableau Périodique; et

(b) d'un composé organique attaché par une liaison covalente via un atome de carbone audit métal, lequel composé contient au moins un groupe comprenant un atome d'oxygène qui forme une liaison non covalente, additionnelle avec le métal susdit et lequel composé ne contient pas d'atome d'hydrogène dans une position bêta par rapport au métal (a) qui est facilement accessible à ce métal; et

(c) d'un ou plusieurs ligands se complexant avec le métal (a), lesquels ligands sont choisis parmi les ligands bidentés, les ligands polydentés et les ligands qui, en plus d'un ou plusieurs sites de complexation, comprennent au moins un site qui peut former une liaison non complexante avec le métal (a), pour autant que, lorsque le ligand est un ligand bidenté azoté ($L^1$) qui est la N,N,N',N'-tétraméthyléthylènediamine ou la 2,2'-bipyridine, le système de catalyseur soit à base d'un autre produit que le produit d'insertion oléfinique de $[L^1Pd-CO-CH_3](CF_3SO_3)$ et de norbornène et, lorsque le ligand est un ligand bidenté azoté ($L^2$) qui est la 2,2'-bipyridine, le système de catalyseur soit à base d'un produit autre que le produit d'insertion oléfinique de $[L^1Pd-CO-CH_3](CF_3SO_3)$ et de cyclopentadiène.

**15.** Système de catalyseur suivant la revendication 14, caractérisé en ce que le système de catalyseur est à base de palladium en ce qui concerne (a).